# EUROPEAN PATENT APPLICATION

(11) **EP 3 633 943 A1**
(43) Date of publication of application: **08.04.2020**
(21) Application number: 18020479.4
(22) Date of filing: 02.10.2018
(51) Int. Cl.: H04L 27/04, H04B 10/116, H04W 52/02

(54) **TRANSMITTING DEVICE, RECEIVING DEVICE AND METHODS OF OPERATION**

(71) Applicant: Vestel Elektronik Sanayi ve Ticaret A.S., 45030 Manisa (TR)
(72) Inventor: Döner, Çagdas, 45030 Manisa (TR)
(74) Representative: Flint, Adam

(57) **Abstract**

The number of occurrences of 1s and the number of occurrences of 0s in data to be transmitted is counted at a transmitting device (10). A transmitter (12) of the transmitting device (10) transmits a signal that encodes the data for receipt by a receiving device (40). If the number of 0s in the data to be transmitted exceeds the number of 1s in the data to be transmitted, then a 1 is represented by a signal transmitted with a high intensity and a 0 is represented by a signal transmitted with a low or zero intensity. If the number of 1s in the data to be transmitted exceeds the number of 0s in the data to be transmitted by a threshold, then a 0 is represented by a signal transmitted with a high intensity and a 1 is represented by a signal transmitted with a low or zero intensity.

## Description

### Technical Field

The present disclosure relates to a transmitting device, a receiving device, a method of operating a transmitting device, a method of operating a receiving device and computer programs therefor.

### Background

Amplitude shift keying (ASK) is a modulation technique used for communication of digital data. In its simplest form, the source or transmitting device transmits a carrier with a large amplitude when it wants to send a 1 and transmits a carrier with a small amplitude when it wants to send a 0. A simplification of the ASK technique is on-off key (OOK) modulation, in which the transmitting device sends no carrier (or, equivalently, the amplitude of the carrier is set to zero) when it wants to send a 0.

### Summary

According to a first aspect disclosed herein, there is provided a method of operating a transmitting device to transmit data for receipt by a receiving device, the method comprising:
receiving data to be transmitted;
counting the number of occurrences of 1s and the number of occurrences of 0s in the data to be transmitted; and
controlling a transmitter of the transmitting device to cause the transmitter to transmit a signal that encodes the data for receipt by a receiving device;
wherein:
   if the number of 0s in the data to be transmitted exceeds the number of 1s in the data to be transmitted by a threshold, then the transmitter is controlled such that a 1 in the data to be transmitted is represented by a signal transmitted by the transmitter with a high intensity and a 0 in the data to be transmitted is represented by a signal transmitted by the transmitter with a low or zero intensity, and
   if the number of 1s in the data to be transmitted exceeds the number of 0s in the data to be transmitted by a threshold, then the transmitter is controlled such that a 0 in the data to be transmitted is represented by a signal transmitted by the transmitter with a high intensity and a 1 in the data to be transmitted is represented by a signal transmitted by the transmitter with a low or zero intensity.

This can save power at the transmitting device, as the need to transmit signals at a high intensity can be reduced or minimised. In the case that the signals are light which is transmitted at visible wavelengths, this can also help to reduce or minimise the "flicker" that can be visible to users or other people in the neighbourhood of the transmitting and/or receiving devices.

If the number of 0s is the same as the number of 1s, or at least the same within a threshold, then the data may be transmitted in the "conventional" way, in which 1s are represented by a high intensity transmission, or in the "inverse" way, in which 1s are represented by a low intensity transmission. It should be noted that the "inverse" encoding may be achieved by for example swapping the 1s and 0s in the original data before that is passed to a modulator that modulates the signal transmitted by the transmitter and operating the modulator in the conventional way, or, equivalently, by passing the original data to the modulator but controlling the modulator to transmit 1s in the original data with a low intensity and 0s in the original data with a high intensity.

In an example, the transmitting device transmits status information to indicate for the receiving device whether the transmitted signal is such that a 1 in the data to be transmitted is represented by a high intensity signal or such that a 0 in the data to be transmitted is represented by a high intensity signal.

In an example, the method comprises, if the received data is not binary data, converting the received data to binary data prior to counting the number of occurrences of 1s and 0s in the binary data.

In an example, the signals transmitted by the transmitter are visible light signals.

According to a second aspect disclosed herein, there is provided a transmitting device for transmitting data for receipt by a receiving device, the transmitting device comprising:
a pre-modulation encoder for receiving data to be transmitted by the transmitting device, the pre-modulation encoder being constructed and arranged to count the number of occurrences of 1s and the number of occurrences of 0s in the data to be transmitted;
a transmitter for transmitting a signal that encodes the data for receipt by a receiving device; and
a modulator for modulating a drive signal to the transmitter to cause the transmitter to encode the signal according to the data and the count of the number of occurrences of 1s and the number of occurrences of 0s in the data to be transmitted;
wherein the arrangement is such that:
   if the number of 0s in the data to be transmitted exceeds the number of 1s in the data to be transmitted by a threshold, then the modulator modulates the drive signal to the transmitter such that a 1 in the data to be transmitted is represented by a signal transmitted by the transmitter with a high intensity and a 0 in the data to be transmitted is represented by a signal transmitted by the transmitter with a low or zero intensity, and
   if the number of 1s in the data to be transmitted exceeds the number of 0s in the data to be transmitted by a threshold, then the modulator modulates the drive signal to the transmitter such that a 0 in the data to be transmitted is represented by a signal transmitted by the transmitter with a high intensity and a 1 in the data to be transmitted is represented by a signal transmitted by the transmitter with a low or zero intensity.

In an example, the transmitting device is arranged to transmit status information to indicate for the receiving device whether the transmitted signal is such that a 1 in the data to be transmitted is represented by a high intensity signal or such that a 0 in the data to be transmitted is represented by a high intensity signal.

In an example, the transmitting device is arranged such that, if the received data is not binary data, the received data is converted to binary data prior to counting the number of occurrences of 1s and of 0s in the binary data.

In an example, the transmitting device is arranged to transmit signals as visible light signals.

According to a third aspect disclosed herein, there is provided a method of receiving and demodulating a data signal received at a receiving device from a transmitting device, the method comprising:
receiving at the receiving device a signal transmitted by a transmitting device, the signal being modulated to represent 1s and 0s with high and low intensity signals or with low and high intensity signals, the signal including status information to indicate for the receiving device whether the transmitted signal is such that a 1 is represented by a high intensity signal or such that a 0 is represented by a high intensity signal;
reading the status information; and
demodulating the received signal in accordance with the status information.

In an example, the signals received at the receiving device are visible light signals.

According to a fourth aspect disclosed herein, there is provided a receiving device for receiving and demodulating a data signal received from a transmitting device, the receiving device comprising:
a receiver for receiving a data signal transmitted by a transmitting device, the signal being modulated to represent 1s and 0s with high and low intensity signals or with low and high intensity signals;
a decoder arranged to read status information in a said data signal which indicates whether the transmitted signal is such that a 1 is represented by a high intensity signal or such that a 0 is represented by a high intensity signal; and
a demodulator arranged to demodulate the received signal in accordance with the status information.

In an example, the receiver is arranged to receive visible light signals.

There is also provided a computer program comprising instructions such that when the computer program is executed on a transmitting device, the transmitting device is arranged to carry out a method as described above.

There is also provided a computer program comprising instructions such that when the computer program is executed on a receiving device, the receiving device is arranged to carry out a method as described above.

There may be provided a non-transitory computer-readable storage medium storing one or other of the computer programs as described above.

### Brief Description of the Drawings

To assist understanding of the present disclosure and to show how embodiments may be put into effect, reference is made by way of example to the accompanying drawings in which:
Figure 1 shows schematically signal levels for a transmission using on-off key (OOK) modulation;
Figure 2 shows schematically an example of a transmitting device and an example of a receiving device according to the present disclosure; and
Figure 3 shows a flow chart for an example of operating a transmitting device according to the present disclosure.

### Detailed Description

As mentioned, amplitude shift keying (ASK) is a modulation technique used for communication of digital data. In short, the information to be transmitted is encoded in the amplitude of the transmitted signal. The source or transmitting device transmits a carrier with a large amplitude when it wants to send a 1 and transmits a carrier with a small amplitude when it wants to send a 0. A simplification of the ASK technique is on-off key (OOK) modulation, in which the transmitting device sends no carrier (or, equivalently, the amplitude of the carrier is set to zero) when it wants to send a 0. Examples described herein have application to ASK modulation techniques generally and to OOK modulation techniques in particular.

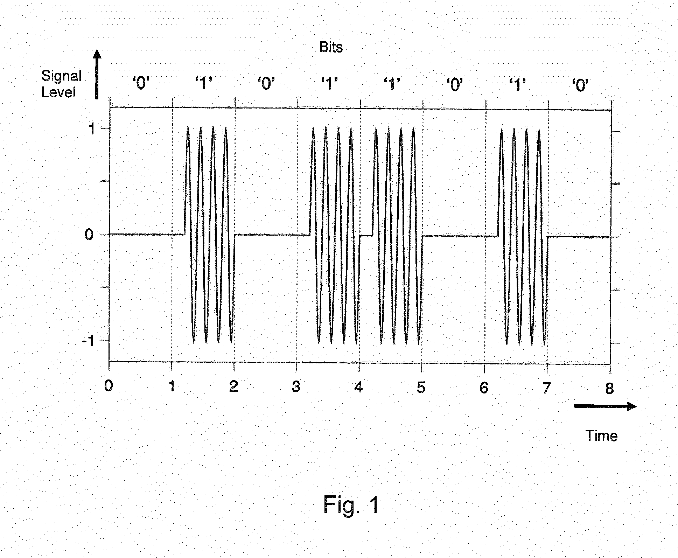

An example of an OOK transmission is shown schematically in Figure 1, which shows the signal level against time for a transmission using OOK modulation over 8 time slots. At the first time slot, a 0 is to be transmitted, so the amplitude of the transmitted signal is set to zero. At the second time slot, a 1 is to be transmitted, so the amplitude of the transmitted signal is set to a maximum. For the next time slot, a 0 is to be transmitted, so the amplitude of the transmitted signal is set to zero again. The amplitude is set for the subsequent time slots according to the bit to be transmitted, as indicated. ASK operates in substantially the same way except that the amplitude is set to a minimum rather than to zero when a 0 is to be transmitted.

ASK and OOK communication protocols are commonly used in short-range wireless applications. Some examples include home automation, industrial networks, wireless base stations and remote keyless entry. A particular advantage of OOK is its low power consumption as no transmit power is required when sending 0s. Correspondingly, the power consumption of ASK can also be relatively low as a lower power is required when sending 0s. ASK, and OOK in particular, are therefore particularly useful in battery-operated applications. However, further savings on power consumption are always beneficial. This is especially the case given the growth in battery-powered devices which need to communicate with other devices, including devices for the so-called "Internet of Things" (IoT).

The carrier frequencies which are used can vary greatly depending on for example the application. For example, around 2 MHz is used in some low-frequency wired communications in base stations. Around 433 MHz is typically used in short-range wireless communications that make use of the industrial, scientific, and medical (ISM) band, though ISM bands in general may extend from a few MHz to many GHz. Moreover, many devices use visible light for the transmissions, in so-called visible light communication (VLC). Visible light may be regarded as light with a wavelength ranging from around 390 nm to 700 nm, i.e. a frequency in the range of around 430 to 770 THz.).

In accordance with examples of the present disclosure, a transmitting device uses "conventional" ASK or OOK modulation when the number of 0s to be transmitted is greater than the number of 1s to be transmitted (or at least greater by some threshold): 1s in the original data are represented by a large amplitude and 0s in the original data are represented by a low or zero amplitude. On the other hand, if the number of 1s to be transmitted is greater than the number of 0s to be transmitted (or at least greater by some threshold), then the transmitting device uses a "swapped" or "inverse" ASK or OOK encoding or modulation: 0s in the original data are represented by a large amplitude and 1s in the original data are represented by a low or zero amplitude.

In this way, power consumption by the transmitting device is minimised as the use of large amplitudes to convey bits is minimised: those bits that are most common are transmitted using a low or zero amplitude.

Furthermore, in the case that the carrier is visible light emitted by the transmitting device, the emission of visible light by the transmitting device can sometimes be seen by users or other people in the vicinity of the transmitting device. This can be seen as a rapid "flickering" effect, which can be disturbing. Examples described herein can minimise the on time of the transmissions, or at least maximise the transmissions that use a reduced amplitude, which helps to reduce the flickering and therefore disturbance to users.

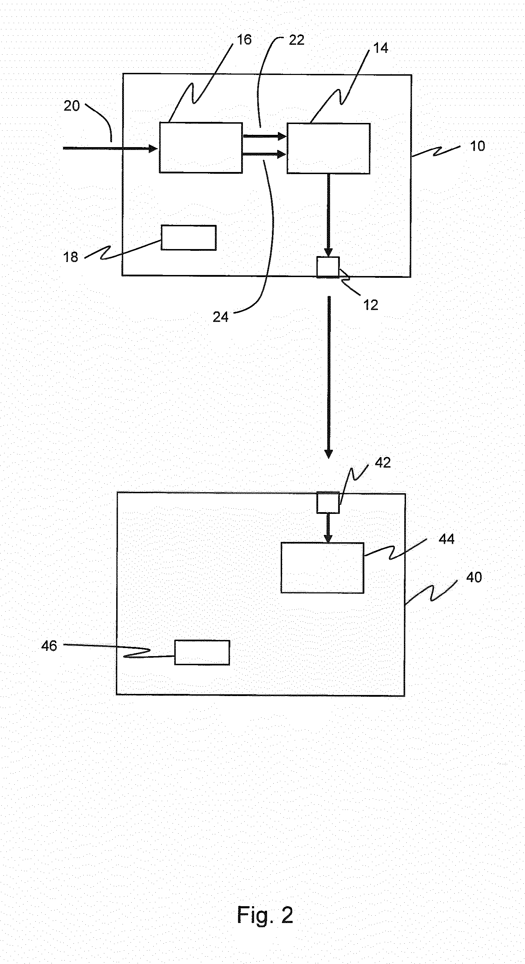

Referring now to Figure 2, this shows schematically an example of a transmitting device 10 and an example of a receiving device 40 according to the present disclosure.

The transmitting device 10 has a transmitter 12 which is controlled to transmit signals to convey data from the transmitting device. In an example, the transmissions are wireless. The transmissions may be for example in the ISM band. In another example, the transmissions are of visible light. Where the transmissions are of visible light, the transmitter may be for example an LED (light emitting diode).

The transmitting device 10 has a modulator module 14 which modulates a drive signal to the transmitter 12 to control the transmissions to convey the data as required. Further, in this example, the transmitting device 10 has a pre-modulation encoder 16. Data which is to be transmitted is received at the pre-modulation encoder 16 and processed as described further below. The pre-modulation encoder 16 provides outputs to the modulator 14, again as will be described further below. The pre-modulation encoder 16 and the modulator 14 may be implemented by for example the same or different processors. There may for example be a single main processor which controls overall operation of the transmitting device 10, including the modulation and pre-modulation phases discussed here, or plural processors may be provided. The transmitting device 10 may also have storage 18, which may include working memory for the processor(s) and/or permanent storage for permanent storage of data, computer programs, etc.

The receiving device 40 has a receiver 42, suitable for receiving wireless transmissions from the transmitting device 10. As a particular example, if the transmitting device 10 transmits visible light, using for example an LED as the transmitter 12, then the receiver 42 may be a photodiode. The receiving device 40 further has a demodulator 44 for demodulating transmissions received via the receiver 42, as will be described further below. The demodulator 44 may be implemented by for example a processor, which may be a main processor of the receiving device 40 or which may be provided as a separate processor. The receiving device 40 may also have storage 46, which may include working memory for the processor(s) and/or permanent storage for permanent storage of data, computer programs, etc.

In some examples, one or both of the transmitting device 10 and the receiving device 40 may be used in bidirectional communications and, as such, has both a transmitter and a receiver, with corresponding modulators and demodulators.

The transmitting device 10 in an example is arranged to operate as follows.

Data 20 is received at the pre-modulation encoder 16 of the transmitting device 10. This may be data that is received at the transmitting device 10 from some other device. Alternatively or additionally, this may be data that is generated by the transmitting device 10. As just one example of this, the transmitting device 10 may be a sensor which senses some environmental characteristic, such as for example temperature, humidity, levels of certain air pollutants, etc. The data that is gathered may then need to be transmitted to some monitoring station or to some relay device which relays the data to a monitoring station.

If the data that is received at the pre-modulation encoder 16 is not binary data, simply formed of 1s and 0s, then the pre-modulation encoder 16 operates to convert the data to binary form. For example, the data received at the pre-modulation encoder 16 may be decimal or hexadecimal data, which is easily converted to binary. In any event, this now represents that data that is to be transmitted.

The pre-modulation encoder 16 counts the number of occurrences of 1s in the data to be transmitted and the number of occurrences of 0s in the data to be transmitted. For this, the data may be dealt with in "chunks" or "blocks". For example, the data may be processed 8 bits or some multiple of 8 bits at a time. The pre-modulation encoder 16 then compares the number of 1s and the number of 0s to determine which is greater. A threshold for this may be used, for example to prevent frequent swapping between conventional and inverse modulation, such that a swap between conventional and inverse modulation is only made if the number of 1s exceeds the number of 0s of vice versa by some non-zero threshold. This may not be necessary however in all implementations.

In the case that the number of 0s exceeds the number of 1s, then the data is passed to the modulator 14 for the modulator 14 to modulate the drive signal to the transmitter 12 so that the transmitter 12 transmits the data in the conventional way (according to ASK or OOK in particular as the case may be). In particular, if the number of 0s exceeds the number of 1s, then the transmitter 12 transmits signals such that 1s are conveyed by a large amplitude and 0s are conveyed by a low or zero amplitude.

On the other hand, in the case that the number of 1s exceeds the number of 0s, then the data is passed to the modulator 14 for the modulator 14 to modulate the drive signal to the transmitter 12 so that the transmitter 12 transmits the data in the "inverse" way. In particular, if the number of 1s exceeds the number of 0s, then the transmitter 12 transmits signals such that 0s are conveyed by a large amplitude and 1s are conveyed by a low or zero amplitude.

The effect of this is that the overall power consumption of the transmitting device 10 and in particular the power consumption of the transmitter 12 is minimised. The transmitter 12 is transmitting at a large amplitude for the minimum amount of time (i.e. the minimum number of time slots) necessary. This can also reduce the flickering effect which can be seen in the case that the transmissions are of visible light.

To illustrate this with a specific example, assume that the data to be sent is the (natural language) word "no", which is made up of the two letters "n" and "o". The ASCII (American Standard Code for Information Interchange) code for the letter "n" in decimal is 110, which in binary is 01101110. The ASCII code for the letter "o" in decimal is 111, which in binary is 01101111. Accordingly, the ASCII equivalent of the word "no" in binary is the bitstream 01101110 01101111. The pre-modulator 16 counts the number of 1s and 0s in the bitstream. The number of 0s is five and the number of 1s is eleven. Accordingly, to transmit the word "no" as the bitstream 01101110 01101111, effectively the "conventional" ASK or OOK modulation is swapped such that the five 0s are transmitted as a large amplitude and the eleven 1s are transmitted as a low or zero amplitude. This is illustrated in the tables below for 16 time slots t0 to t15 for the 16 bits being transmitted:

| Data | **0** | **1** | **1** | **0** | **1** | **1** | **1** | **0** |
|---|---|---|---|---|---|---|---|---|
| Timeslot | t0 | t1 | t2 | t3 | t4 | t5 | t6 | t7 |
| Conventional Modulation | Off | On | On | Off | On | On | On | Off |
| Swapped Modulation | On | Off | Off | On | Off | Off | Off | On |

| Data | **0** | **1** | **1** | **0** | **1** | **1** | **1** | **1** |
|---|---|---|---|---|---|---|---|---|
| Timeslot | t8 | t9 | t10 | t11 | t12 | t13 | t14 | t15 |
| Conventional Modulation | Off | On | On | Off | On | On | On | On |
| Swapped Modulation | On | Off | Off | On | Off | Off | Off | Off |

The receiving device 40 of this example needs to know whether conventional modulation or the swapped or inverse encoding or modulation is being used by the transmitting device 10 for the transmissions. This could be a "soft" decision, which the receiving device 40 makes based on some analysis of the data that is received and knowing an expected or average rate of 1s and 0s that are to be received in the data.

However, a more robust technique is for the transmitting device 10 to transmit some status information which informs the receiving device 40 whether conventional or inverse modulation has been used for the data. For example, the transmitting device 10 may transmit a status bit prior to the payload that conveys the data to be transmitted. Such a status bit may be sent just after some header or some data that indicates that the payload data is about to be transmitted, or after some wake-up data which is intended to wake up the receiving device 40. If the status bit is 0, then this may be interpreted by the receiving device 40 that conventional modulation has been used, and if the status bit is 1, then this may be interpreted by the receiving device 40 that the inverse modulation has been used (or vice versa). The receiving device 40 can then decode the received signal correctly, knowing that a large amplitude indicates a 1 or a 0 as the case may be according to whether conventional or inverse modulation has been used.

It should be noted that the "inverse" encoding or modulation may be achieved by for example the pre-modulation encoder 16 of the transmitting device 10 swapping the 1s and 0s in the data 20 that is received at the pre-modulation encoder 16 (or the binary version thereof if that data 20 is not in binary form) before that data is passed 22 to the modulator 14. The modulator 14 then modulates the signal transmitted by the transmitter 12 in the conventional way (i.e. with 1s being indicated by a large amplitude and 0s being indicated by a small or zero amplitude). The pre-modulation encoder 16 also passes a status bit 24 to indicate that the 1s and 0s have been swapped, and the modulator 14 can then cause the transmitter 12 to transmit the status bit 24 to the receiving device 40, so that the receiving device 40 knows that the 1s and 0s have been swapped and can therefore decode the received data correctly.

As an alternative and equivalent technique when the "inverse" encoding or modulation is to be used, the pre-modulation encoder 16 can pass 22 the data received at the pre-modulation encoder 16 (or the binary version thereof if that data 20 is not in binary form) to the modulator 14 along with a status bit 24 which the modulator 14 takes as an instruction to transmit 1s with a low or zero amplitude and 0s with a large amplitude. Again, the modulator 14 can cause the transmitter 12 to transmit the status bit 24 to the receiving device 40, so that the receiving device 40 knows that the modulation of the 1s and 0s has been swapped, so that the receiving device 40 can decode the received data correctly.

The pre-modulation encoder 16 in an example is implemented entirely in hardware, for example as an application-specific integrated circuit (ASIC), a field-programmable gate array (FPGA) or the like. This results in faster processing than if the functionality of the pre-modulation encoder 16 is implemented in software. This is particularly beneficial as the counting of 1s and 0s by the pre-modulation encoder 16 is a relatively time-consuming process. On the other hand, the functionality of the demodulator 44 of the receiving device 40 may be implemented in software. Moreover, and especially if the pre-modulation encoder 16 is implemented entirely in hardware, the 1s and 0s of the data 22 and the status bit may be conveyed as high and low voltages, of for example 5 V and 0 V respectively, at the outputs of the pre-modulation encoder 16 to the modulator 14.

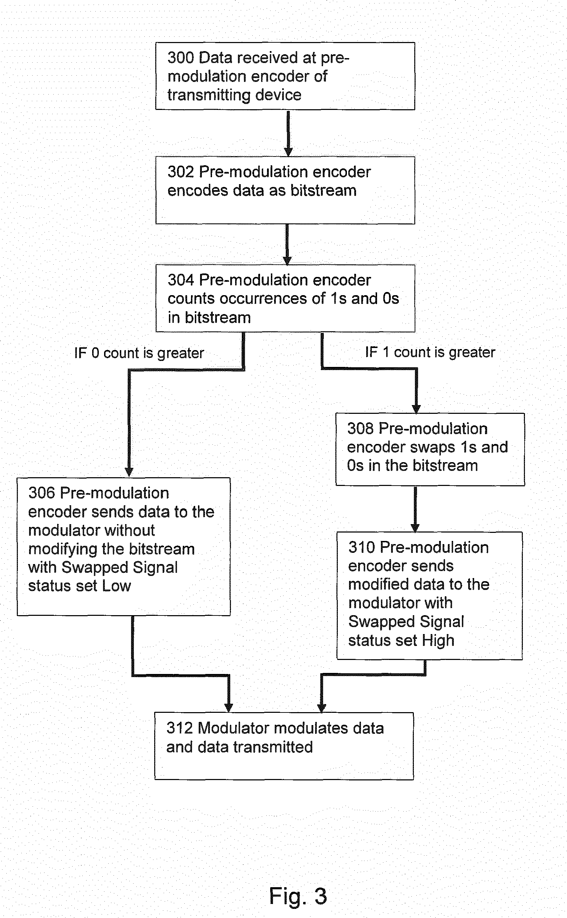

Referring now to Figure 3, this shows a flow chart for an example of operating a transmitting device according to the present disclosure.

At 300, data is received at the pre-modulation encoder 16 of the transmitting device 10. At 302, the pre-modulation encoder 16 encodes the data as a bitstream in the case that the received data is not already a bitstream. At 304 the pre-modulation encoder 16 counts the occurrences of 1s and 0s in the bitstream.

If the count of 0s is greater, then flow passes to 306. At 306 the pre-modulation encoder 16 sends the data to the modulator 14 without modifying the bitstream and with the Swapped Signal 24 status set Low.

On the other hand, if the count of 1s is greater, then flow passes to 308. At 308, the pre-modulation encoder 16 swaps the 1s and 0s in the bitstream. At 310, the pre-modulation encoder 16 sends the modified data to the modulator 14 with the Swapped Signal 24 status set High. (Again, it is mentioned that as an alternative, the pre-modulation encoder 16 can leave the 1s and 0s as they were in the original binary data, and the Swapped Signal 24 is interpreted by the modulator 14 as a command to transmit 1s as a low or zero amplitude and 0s as a high amplitude.)

Finally, at 312 the modulator 14 modulates the data received from the pre-modulation encoder 16 to encode the 1s and 0s as described, i.e. in the conventional way or the inverse or swapped way, and the data is transmitted.

The transmitting device 10 may be one of many different types of device that needs to communicate to some other, receiving device 40. For example, the transmitting device 10 may be used in home automation, industrial networks, etc. The transmitting device 10 may be an IoT device. In general, as used herein, an IoT device is a device that has an addressable interface (e.g. an Internet protocol (IP) address, a Bluetooth identifier (ID), a near-field communication (NFC) ID, etc.) and can transmit information to one or more other devices. IoT devices may in general include or be incorporated in for example sensors, refrigerators, ovens, microwaves, freezers, dishwashers, clothes washing machines, clothes dryers, furnaces, air conditioners, thermostats, televisions and other consumer electronic devices, light fixtures, vacuum cleaners, sprinklers, electricity meters, gas meters, etc.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (e.g. a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of operating a transmitting device to transmit data for receipt by a receiving device, the method comprising:
receiving data to be transmitted;
counting the number of occurrences of 1s and the number of occurrences of 0s in the data to be transmitted; and
controlling a transmitter of the transmitting device to cause the transmitter to transmit a signal that encodes the data for receipt by a receiving device;
wherein:
if the number of 0s in the data to be transmitted exceeds the number of 1s in the data to be transmitted by a threshold, then the transmitter is controlled such that a 1 in the data to be transmitted is represented by a signal transmitted by the transmitter with a high intensity and a 0 in the data to be transmitted is represented by a signal transmitted by the transmitter with a low or zero intensity, and
if the number of 1s in the data to be transmitted exceeds the number of 0s in the data to be transmitted by a threshold, then the transmitter is controlled such that a 0 in the data to be transmitted is represented by a signal transmitted by the transmitter with a high intensity and a 1 in the data to be transmitted is represented by a signal transmitted by the transmitter with a low or zero intensity.

2. A method according to claim 1, wherein the transmitting device transmits status information to indicate for the receiving device whether the transmitted signal is such that a 1 in the data to be transmitted is represented by a high intensity signal or such that a 0 in the data to be transmitted is represented by a high intensity signal.

3. A method according to claim 1 or claim 2, comprising, if the received data is not binary data, converting the received data to binary data prior to counting the number of occurrences of 1s and 0s in the binary data.

4. A method according to any of claims 1 to 3, wherein the signals transmitted by the transmitter are visible light signals.

5. A transmitting device for transmitting data for receipt by a receiving device, the transmitting device comprising:
a pre-modulation encoder for receiving data to be transmitted by the transmitting device, the pre-modulation encoder being constructed and arranged to count the number of occurrences of 1s and the number of occurrences of 0s in the data to be transmitted;
a transmitter for transmitting a signal that encodes the data for receipt by a receiving device; and
a modulator for modulating a drive signal to the transmitter to cause the transmitter to encode the signal according to the data and the count of the number of occurrences of 1s and the number of occurrences of 0s in the data to be transmitted;
wherein the arrangement is such that:
if the number of 0s in the data to be transmitted exceeds the number of 1s in the data to be transmitted by a threshold, then the modulator modulates the drive signal to the transmitter such that a 1 in the data to be transmitted is represented by a signal transmitted by the transmitter with a high intensity and a 0 in the data to be transmitted is represented by a signal transmitted by the transmitter with a low or zero intensity, and
if the number of 1s in the data to be transmitted exceeds the number of 0s in the data to be transmitted by a threshold, then the modulator modulates the drive signal to the transmitter such that a 0 in the data to be transmitted is represented by a signal transmitted by the transmitter with a high intensity and a 1 in the data to be transmitted is represented by a signal transmitted by the transmitter with a low or zero intensity.

6. A transmitting device according to claim 5, arranged to transmit status information to indicate for the receiving device whether the transmitted signal is such that a 1 in the data to be transmitted is represented by a high intensity signal or such that a 0 in the data to be transmitted is represented by a high intensity signal.

7. A transmitting device according to claim 5 or claim 6, arranged such that, if the received data is not binary data, the received data is converted to binary data prior to counting the number of occurrences of 1s and of 0s in the binary data.

8. A transmitting device according to any of claims 5 to 7, wherein the transmitter is arranged to transmit signals as visible light signals.

9. A method of receiving and demodulating a data signal received at a receiving device from a transmitting device, the method comprising:
receiving at the receiving device a signal transmitted by a transmitting device, the signal being modulated to represent 1s and 0s with high and low intensity signals or with low and high intensity signals, the signal including status information to indicate for the receiving device whether the transmitted signal is such that a 1 is represented by a high intensity signal or such that a 0 is represented by a high intensity signal;
reading the status information; and
demodulating the received signal in accordance with the status information.

10. A method according to 9, wherein the signals received at the receiving device are visible light signals.

11. A receiving device for receiving and demodulating a data signal received from a transmitting device, the receiving device comprising:
a receiver for receiving a data signal transmitted by a transmitting device, the signal being modulated to represent 1s and 0s with high and low intensity signals or with low and high intensity signals;
a decoder arranged to read status information in a said data signal which indicates whether the transmitted signal is such that a 1 is represented by a high intensity signal or such that a 0 is represented by a high intensity signal; and
a demodulator arranged to demodulate the received signal in accordance with the status information.

12. A receiving device according to claim 11, wherein the receiver is arranged to receive visible light signals.

13. A computer program comprising instructions such that when the computer program is executed on a transmitting device, the transmitting device is arranged to carry out a method according to any of claims 1 to 4.

14. A computer program comprising instructions such that when the computer program is executed on a receiving device, the receiving device is arranged to carry out a method according to claim 9 or claim 10.
